# EUROPÄISCHE PATENTSCHRIFT

(11) **EP 1 280 867 B1**
(45) Veröffentlichungstag und Bekanntmachung des Hinweises auf die Patenterteilung: **01.12.2004**
(21) Anmeldenummer: 01951491.8
(22) Anmeldetag: 09.05.2001
(51) Int. Cl.: C09J 5/06, B32B 31/00, B29C 65/14

(54) **VERFAHREN UND ANORDNUNG ZUR HERSTELLUNG EINER GEKLEBTEN VERBUNDSTRUKTUR**
METHOD AND ARRANGEMENT FOR PRODUCING A BONDED COMPOSITE STRUCTURE
PROCEDE ET ENSEMBLE POUR FABRIQUER UNE STRUCTURE COMPOSITE COLLEE

(30) Priorität: 09.05.2000 DE 10022472; 18.05.2000 DE 10024706; 23.01.2001 DE 20101166 U
(43) Veröffentlichungstag der Anmeldung: 05.02.2003
(73) Patentinhaber: Advanced Photonics Technologies AG, 83052 Bruckmühl-Heufeld (DE)
(72) Erfinder: BÄR, Kai, K., O., 83052 Bruckmühl-Heufeld (DE); GAUS, Rainer, 83052 Bruckmühl-Heufeld (DE); HÜLSMANN, Thorsten, 83135 Schechen (DE); WIRTH, Rolf, 83052 Bruckmühl-Heufeld (DE); FLECK, Georg, 85551 Kirchheim, (DE)
(74) Vertreter: Heinze, Ekkehard, Dipl.-Phys. Dr.
(86) Internationale Anmeldenummer: PCT/EP2001/005274
(87) Internationale Veröffentlichungsnummer: WO 2001/085862

(56) Entgegenhaltungen:
- EP-A- 0 603 047
- EP-A- 0 767 149
- DE-U- 29 823 682
- PATENT ABSTRACTS OF JAPAN vol. 1997, no. 08, 29. August 1997 (1997-08-29) & JP 09 095649 A (TOPPAN MOORE CO LTD), 8. April 1997 (1997-04-08)

## Beschreibung

Die Erfindung betrifft ein Verfahren zur Herstellung einer geklebten Verbundstruktur nach dem Oberbegriff des Anspruchs 1.

Das Kleben hat sich als einfache, kostengünstige und zuverlässige Verbindungstechnik unzählige Anwendungsgebiete auf verschiedensten Gebieten der Technik erschlossen. Seit einigen Jahren werden im großen Maßstab auch Metallteile miteinander oder mit Teilen aus anderen Materialien verklebt, beispielsweise in der Automobil- und Flugzeugproduktion.

Zu diesem Zweck kommen üblicherweise thermisch aktivierbare Klebstoffe, sogenannte Heiß- oder Schmelzkleber ("Hotmelts") zum Einsatz. Es handelt sich hierbei um Ein- oder Zweikomponentensysteme, mit denen sich hohe Endfestigkeiten von mehr als 5 MPa zu günstigen Kosten und mit einfachen und leicht automatisierbaren technologischen Abläufen erzielen lassen.

Ein Problem dieser Klebstoffe besteht allerdings darin, daß sie bei Temperaturen oberhalb von 140 bis 180°C aktiviert werden müssen, um mindestens die sogenannte Handling-Festigkeit (die im Automobilbau bei 1 MPa liegt) bzw. die sogenannte Auswaschfestigkeit, d. h. die Beständigkeit gegenüber Einwirkung von Wasser oder Lösungsmitteln, zu erreichen. Um diese Festigkeiten zu erzielen, werden die gefügten Teile mindestens kurzzeitig in geeigneten Öfen erhitzt. Für voluminöse Teile, wie etwa vollständige Autokarosserien, handelt es sich dabei um einen höchst aufwendigen Schritt - sowohl was die Bereitstellung der entsprechenden Öfen als auch die Prozeßdauer und den logistischen Aufwand angeht.

Die EP-A-0 603 047 beschreibt ein Verfahren zur Herstellung einer geklebten Glas-Metall-Verbundstruktur, bei dem ein thermisch aktivierbarer Klebstoff mit elektromagnetischer Strahlung im Bereich des nahen Infrarot mit λ = 0,76 - 1,5 µm bestrahlt wird.

Die EP-A-0 767 149 beschreibt eine Anordnung mit einer IR-Strahlungsquelle und einem Reflektorspiegel zur Durchführung eines derartigen Verfahrens. Eine ähnliche Anordnung ist auch in der DE-U-298 23 682 der Anmelderin beschrieben, dort indes zur Durchführung eines Laminierungsverfahrens.

Der Erfindung liegt daher die Aufgabe zugrunde, ein unaufwendiges, leicht an verschiedene Anwendungssituationen anpaßbares und vorteilhaft in vorgeprägte technologische Abläufe einfügbares Verfahren der gattungsgemäßen Art anzugeben.

Diese Aufgabe wird durch ein Verfahren mit den Merkmalen des Anspruchs 1 gelöst.

Die Erfindung schließt den grundlegenden Gedanken ein, die zu einer mindestens teilweisen thermischen Aktivierung des Klebstoffs erforderlichen Temperaturen zumindest primär im Inneren der Klebstoffschicht bzw. des Klebstoffaggregates zu erzeugen. Hierdurch wird dem Problem der sehr niedrigen Wärmeleitfähigkeit der erwähnten Klebstoffe, die eine Durchwärmung des Klebstoffvolumens von den Umgebungsflächen her sehr erschwert, auf unkonventionelle Weise begegnet. Weiter schließt die Erfindung den Gedanken ein, hierzu energiereiche elektromagnetische Strahlung zu verwenden, für die die verwendeten Klebstoffe vergleichsweise transparent sind, so daß die Strahlung gut in das Innere des Klebstoffs eindringen kann. Nach den Untersuchungen der Erfinder gilt dies insbesondere für Strahlung im Bereich des nahen Infrarots (NIR), also mit einer Wellenlänge zwischen 0,8 und 1,5 µm.

Im Rahmen der Erfindung liegt es aber auch, unmittelbar angrenzende Bereiche der zu fügenden Teile mit dieser Strahlung (NIR-Strahlung) und über diese Teile schließlich den Klebstoff selbst zu erwärmen. Für viele Anwendungen besonders bevorzugt ist eine Kombination aus der zuerst erwähnten direkten ("internen") und der zuletzt erwähnten indirekten ("externen") Erwärmung.

Bei direkter Bestrahlung der Klebstoffschichten bzw. -aggregate wird bevorzugt mit einer Leistungsdichte im Bereich zwischen 50 und 500 kW/m², insbesondere zwischen 100 und 200 kW/m², gearbeitet. Bei Metallflächen ist der Einsatz einer höheren Leistungsdichte im Bereich zwischen 500 kW/m² und 2 MW/m², insbesondere zwischen 750 kW/m² und 1,5 MW/m², zu bevorzugen.

Die Dauer der Bestrahlung liegt in Abhängigkeit von den Dimensionen, insbesondere der Dicke der Klebstoffschicht bzw. des Klebstoffaggregats im Bereich zwischen 0,5 und 30 s, insbesondere zwischen 2 und 10 s. Diese Werte gelten für Klebstoff-Schichtdicken im Bereich zwischen 2 und 10 mm bzw. lokalisierte Klebstoffaggregate bis zu ca. 10 mm Durchmesser bzw. Kantenlänge.

Zur Erzeugung der NIR-Strahlung werden in besonders einfacher und kostengünstiger Weise weitgehend konventionelle Halogenlampen eingesetzt, die zur Einstellung des gewünschten Strahlungsspektrums insbesondere mit erhöhter Betriebstemperatur betrieben werden. In Abstimmung auf die Geometrie der zu behandelnden Klebstoffschicht werden Flächen- oder Linien- oder Punktstrahler oder eine Kombination aus solchen eingesetzt. Eine Fokussierung der Strahlung wird hier durch geeignet gekrümmte Reflektoren erreicht. Zweckmäßigerweise wird jeweils für eine bestimmte Anwendung eine der Geometrie der zu fügenden Teile und der Klebstoffschichten- bzw. aggregate angepaßte Gesamt-Bestrahlungsgeometrie entworfen und ausgeführt.

Die spektrale Zusammensetzung der Strahlung entspricht (wie oben bereits erwähnt) grundsätzlich in vorteilhafter Weise dem Anwendungszweck, sie ist aber insbesondere durch Änderung der Betriebstemperatur der Halogenlampe(n) oder auch durch Einsatz von Filtern auf die spezifischen Absorptionseigenschaften des eingesetzten Klebstoffs - und wahlweise zusätzlich auf die Absorptionseigenschaften eines gegebenenfalls von der Strahlung teilweise durchdrungenen angrenzenden Teiles - einstellbar. Das Ziel besteht hierbei darin, eine im wesentlichen gleichmäßige Durchwärmung der Klebstoffschicht bzw. des Klebstoffaggregates in kürzester Zeit zu erreichen.

Entsprechende Einstellmittel einer bevorzugten Ausführung der vorgeschlagenen Anordnung erlauben insbesondere eine Einstellung der Strahlertemperatur (bevorzugt von 2900 K oder mehr, insbesondere von über 3200 K) durch Variation der angelegten Betriebsspannung.

Für viele Anwendungen ist eine solche NIR-Strahlungsbehandlung des Klebstoffs ausreichend, daß lediglich die benötigte Handling-Festigkeit bzw. die Auswaschfestigkeit, nicht aber die geforderte Endfestigkeit der Verbindung durch diese Behandlung erreicht wird. Beispielsweise bei der Herstellung von Kraftfahrzeugkarosserien kann die Endfestigkeit in günstiger Weise im Rahmen der thermischen Behandlung des gesamten Fahrzeugs zur Trocknung des Lacks erzeugt werden. Das vorgeschlagene Verfahren kann daher mit sehr kurzen Prozeßdauern auskommen.

Dies ermöglicht insbesondere auch eine abtastende Behandlung von langgestreckten Klebstoffspuren, wie sie beispielsweise längs größerer Karosserieteile vorkommen. Dabei wird die Bestrahlungseinrichtung insbesondere koordinatengesteuert dem Verlauf der Klebstoffspur nachgeführt oder umgekehrt der vorgefügte Verbund aus dem ersten und zweiten Teil gesteuert an der Bestrahlungseinrichtung entlanggeführt.

Die thermische Effizienz des Verfahrens kann erhöht und die Behandlungsdauer damit nochmals verkürzt werden, indem mindestens eines der zu fügenden Teile in dem den Klebstoffauftrag benachbarten Bereich vorgewärmt und somit der Wärmeabfluß während der NIR-Bestrahlung verringert wird.

Bei der erfindungsgemäßen Verbindung von zwei Metallteilen miteinander (beispielsweise zweier Karosserieteile oder eines Karosserie- und eines Fahrgestellteiles eines Kraftfahrzeuges) ergibt sich eine besonders vorteilhafte Verfahrensführung, wenn die beiden Teile einander längs einer vorgesehenen Verbindungslinie nicht vollständig überlappen und angrenzend an den freibleibenden Bereich eine Klebstoffspur oder Klebstoffaggregate oder Abschnitte einer ausgedehnteren Klebstoffschicht vorgesehen sind, die vom freibleibenden Bereich aus sichtbar bzw. zugänglich sind. Auf diese Klebezonen wird die Strahlung nach dem Zusammenfügen der Teile ausgerichtet, um dort eine Aktivierung und die Bildung von die Handling- bzw. Auswaschfestigkeit begründenden Verbindungsabschnitten zu bewirken.

Hierbei ist weiterhin eine Verfahrensführung von Vorteil, bei der eine Reflexion eines Teils der NIR-Strahlung durch eine an die Klebstoffschicht angrenzende metallische Oberfläche bewirkt und zur Vergrößerung der Strahlungsdichte innerhalb des Klebstoffs ausgenutzt wird. Hierdurch kann beispielsweise bei der erwähnten Konfiguration zweier nicht vollständig überlappender Metallteile seitlich eingestrahlte NIR-Strahlung bei geeignetem Einstrahlungswinkel durch Mehrfachreflexionen relativ weit in den Zwischenraum zwischen beiden Teilen und die dort befindliche Klebstoffschicht hinein transportiert werden, so daß eine Aktivierung (und Trocknung bzw. Vernetzung) keineswegs nur im äußersten Kantenbereich, sondern auch noch in beträchtlichem Abstand von diesem erreicht werden kann.

Eine Einstellung der Strahlungsleistung der Bestrahlungseinrichtung erfolgt zweckmäßigerweise durch Variation des Abstandes zwischen der Strahlungsquelle und der Klebstoffschicht bzw. dem Klebstoffaggregat. Grundsätzlich ist eine Einstellung auch über die Änderung der Betriebsspannung und -temperatur der vorzugsweise eingesetzten Halogenlampen möglich. Hiermit wird aber zugleich das Emissionspektrum verändert - was im Hinblick auf die vorteilhafte Abstimmung auf die Absorptionseigenschaften des Klebstoffs unerwünscht sein kann.

Eine spezielle Anwendung des vorgeschlagenen Verfahrens sieht vor, daß in entsprechende Ausnehmungen des ersten und/oder zweiten Teils eng lokalisierte Klebstoffaggregate als provisorische Verbinder (sogenannte "strukturelle Pins") eingefügt und diese anschließend einer entsprechend lokalisierten Strahlung ausgesetzt werden. Durch diese Bestrahlung werden sie mindestens in einem zum "Zusammenheften" der Teile mit der erforderlichen Handling-Festigkeit ausreichenden Maße aktiviert und vernetzt.

Eine weitere interessante Anwendung des vorgeschlagenen Verfahrens besteht in der Aushärtung von Vergußmassenklebern, wie sie zum Schließen kleinerer Hohlräume oder zum Vergießen von Konstruktionsteilen eingesetzt werden.

In den oben erwähnten Anwendungen erfolgt die aktivierende NIR-Bestrahlung bevorzugt nach dem Zusammenfügen der zu verbindenden Teile, für spezielle Anwendungen ist aber auch eine Aktivierung des nur auf ein Teil aufgetragenen Klebstoffs unmittelbar vor dem Anfügen des anderen Teils möglich und sinnvoll.

Bei den mit den vorgeschlagenen Verfahren behandel- und aktivierbaren Klebstoffsystemen handelt es sich um bekannte und handelsübliche Systeme vom thermisch vernetzenden Typ, insbesondere auf PU- oder Epoxidbasis. Gleichwohl kann die Entwicklung von speziell auf die Emissionsspektren der bevorzugt als Strahlungsquellen eingesetzten Halogenlampen abgestimmten Systemen sinnvoll sein.

Die Ausführung der Erfindung ist nicht auf die oben beschriebenen Anwendungsbeispiele und Aspekte beschränkt, sondern ebenso in einer Vielzahl von Abwandlungen derselben sowie weiteren Anwendungen möglich.

## Patentansprüche

1. Verfahren zur Herstellung einer geklebten Verbundstruktur, insbesondere einer oberflächenmontierten Außenhaut- oder Tragstruktur im Fahrzeug-, Flugzeug- oder Schiffbau, aus einem metallischen ersten und zweiten Teil, das über eine Schicht oder ein Aggregat aus einem thermisch aktivierten Klebstoff mit dem ersten Teil verbunden wird,
**dadurch gekennzeichnet, dass**
der Klebstoff und/oder angrenzende Bereiche des ersten und zweiten Teiles kurzzeitig intensiver elektromagnetischer Strahlung mit einem Wirkanteil im Bereich des nahen Infrarot mit λ=0,8 bis 1,5 µm ausgesetzt werden derart, dass eine mindestens zur im wesentlichen sofortigen Erzielung von Handling-Festigkeit im gefügten Zustand ausreichende Aktivierung des Klebstoffs erfolgt.

2. Verfahren nach Anspruch 1,
**dadurch gekennzeichnet, dass**
zur Erzeugung der elektromagnetischen Strahlung eine mit erhöhter Betriebstemperatur betriebene Halogenlampe eingesetzt wird.

3. Verfahren nach Anspruch 1 oder 2,
**dadurch gekennzeichnet, dass**
- das zweite Teil das erste Teil nicht vollständig überdeckt,
- die Klebstoffschicht derart aufgebracht wird, dass sie mindestens einen Abschnitt aufweist, welcher an einen freibleibenden Bereich des ersten Teils angrenzt und von dort zugänglich ist, und
- die Strahlung nach dem Fügen der Teile auf diesen Abschnitt der Klebstoffschicht ausgerichtet wird.

4. Verfahren nach Anspruch 3,
**dadurch gekennzeichnet, dass**
die Strahlung so ausgerichtet wird, dass eine Reflexion an der der Klebstoffschicht benachbarten Oberfläche des ersten Teils im wesentlichen in die Klebstoffschicht hinein erfolgt.

5. Verfahren nach einem der vorangehenden Ansprüche,
**dadurch gekennzeichnet, dass**
der Klebstoff nach dem Auftrag auf das erste und/oder zweite Teil, insbesondere nach deren Zusammenfügung oder unmittelbar vor der Zusammenfügung, der Strahlung ausgesetzt wird.

6. Verfahren nach einem der vorangehenden Ansprüche,
**dadurch gekennzeichnet, dass**
zur Einstellung der Strahlungsleistung der Abstand zwischen der Strahlungsquelle und der Klebstoffschicht bzw. dem Klebstoffaggregat variiert wird.

7. Verfahren nach einem der vorangehenden Ansprüche,
**dadurch gekennzeichnet, dass**
der Klebstoff mit einer Leistungsdichte im Bereich zwischen 50 und 500 kW/m², insbesondere zwischen 100 und 200 kW/m², oder eine angrenzende Metallfläche mit einer Leistungsdichte im Bereich zwischen 500 kW/m² und 2 MW/m², insbesondere zwischen 750 kW/m² und 1,5 MW/m², bestrahlt wird.

8. Verfahren nach einem der vorangehenden Ansprüche,
**dadurch gekennzeichnet, dass**
die Strahlung mit gekrümmten Reflektoren fokussiert wird.

9. Verfahren nach einem der vorangehenden Ansprüche,
**dadurch gekennzeichnet, dass**
die Dauer der Bestrahlung in Abhängigkeit von den Dimensionen, insbesondere von der Dicke, der Klebstoffschicht auf eine Zeit zwischen 0,5 und 30 s, insbesondere zwischen 2 und 10 s, eingestellt wird.

10. Verfahren nach einem der vorangehenden Ansprüche,
**dadurch gekennzeichnet, dass**
eine langgestreckte Klebstoffspur längs ihrer Erstreckung in abtastender Weise fortschreitend der Strahlung ausgesetzt wird, wobei eine koordinatengesteuert dem Verlauf der Klebstoffspur nachführbare Bestrahlungseinrichtung eingesetzt wird oder das gefügte erste und zweite Teil an der Bestrahlungseinrichtung entlang geführt werden.

11. Verfahren nach einem der vorangehenden Ansprüche,
**dadurch gekennzeichnet, dass**
unmittelbar vor der Bestrahlung des Klebstoffs das erste und/oder zweite Teil vorgewärmt wird.

12. Verfahren nach einem der vorangehenden Ansprüche,
**dadurch gekennzeichnet, dass**
in geeignete Ausnehmungen des ersten und/oder zweiten Teils als provisorische Verbinder eng lokalisierte Klebstoffaggregate eingesetzt und einer entsprechend fokussierten Strahlung zur Aktivierung ausgesetzt werden.

## Claims

1. A method of manufacturing a bonded composite structure, in particular a surface-mounted skin structure or supporting structure in automobile, aircraft or naval construction, of a metallic first and second part, which is bonded to the first part by a layer or an aggregate of a thermally activated adhesive,
**characterized in that**
the adhesive and/or adjacent areas of the first and second parts are exposed for a short period to an intensive electromagnetic radiation having an active component in the range of the near infrared with λ = 0.8 to 1.5 µm, such that an activation of the adhesive takes place sufficient for an at least substantially immediate achievement of a handling resistance in the assembled state.

2. The method according to claim 1,
**characterized in that**
a halogen bulb operated at an increased operational temperature is used for generating the electromagnetic radiation.

3. The method according to claim 1 or 2,
**characterized in that**
- the second part does not cover the first part completely,
- the adhesive layer is applied in a manner that it has at least one portion adjacent to the exposed area of the first part and is accessible from there, and
- the radiation is orientated towards this portion of the adhesive layer after assembly of the parts.

4. The method according to claim 3,
**characterized in that**
the radiation is orientated in a manner that reflection at the surface of the first part neighboring the adhesive layer essentially takes place into the adhesive layer.

5. The method according to any one of the preceding claims,
**characterized in that**
after the application on the first and/or second part, in particular after the assembly thereof or immediately prior to the assembly, the adhesive is exposed to radiation.

6. The method according to any one of the preceding claims,
**characterized in that**
the distance between the source of radiation and the adhesive layer or the adhesive aggregate is varied for adjusting the radiation power.

7. The method according to any one of the preceding claims,
**characterized in that**
the adhesive is irradiated at a power density in the range of between 50 and 500 kW/m², in particular of between 100 and 200 kW/m², or an adjacent metal surface is irradiated at a power density in the range of between 500 kW/m² and 2 MW/m², in particular of between 750 kW/m² and 1.5 MW/m².

8. The method according to any one of the preceding claims,
**characterized in that**
the radiation is focused by means of curved reflectors.

9. The method according to any one of the preceding claims,
**characterized in that**
the duration of radiation is set depending on the dimensions, in particular the thickness of the adhesive layer to a time of between 0.5 and 30 s, in particular of between 2 and 10 s.

10. The method according to any one of the preceding claims,
**characterized in that**
an elongate adhesive track is progressively exposed to radiation along its extension in a scanning manner, an irradiation means being used that may track the course of the adhesive track by coordinate-control, or the assembled first and second parts being guided along the irradiation means.

11. The method according to any one of the preceding claims,
**characterized in that**
immediately prior to irradiating the adhesive, the first and/or second part is/are pre-heated.

12. The method according to any one of the preceding claims,
**characterized in that**
closely localized adhesive aggregates are placed in suitable recesses of the first and/or second part as provisional connectors, and are exposed to a correspondingly focused radiation for activation.

## Revendications

1. Procédé de fabrication d'une structure assemblée collée, en particulier d'une structure porteuse ou d'enveloppe extérieure montée en surface dans la construction automobile, aéronautique ou navale, à partir d'une première et d'une deuxième pièce métalliques, reliée à la première pièce par une couche ou un agrégat d'un adhésif activé thermiquement,
**caractérisé en ce que**
l'adhésif et/ou des zones adjacentes de la première et de la deuxième pièce sont exposés brièvement à un rayonnement électromagnétique intensif comportant une proportion efficace dans la zone de l'infrarouge proche, avec λ = 0,8 à 1,5 µm, de manière telle que, au moins, une activation pour l'essentiel suffisante de l'adhésif s'effectue pour obtenir une résistance immédiate à la manipulation en état assemblé.

2. Procédé selon la revendication 1,
**caractérisé en ce que**
une lampe à halogène exploitée à une température de fonctionnement élevée est utilisée pour générer le rayonnement électromagnétique.

3. Procédé selon la revendication 1 ou 2,
**caractérisé en ce que**
- la deuxième pièce ne recouvre pas totalement la première pièce,
- la couche d'adhésif est appliquée de manière telle qu'elle présente au moins une section adjacente à la zone demeurant libre de la première pièce et est accessible à partir de là et
- que le rayonnement est dirigé vers cette section de la couche d'adhésif après disposition des pièces.

4. Procédé selon la revendication 3,
**caractérisé en ce que**
le rayonnement est dirigé de manière telle qu'une réflexion à la surface de la première pièce, adjacente à la couche d'adhésif, s'effectue, pour l'essentiel, vers l'intérieur de la couche d'adhésif.

5. Procédé selon l'une quelconque des revendications précédentes,
**caractérisé en ce que**
l'adhésif, après application sur la première et/ou deuxième pièce, en particulier après leur assemblage ou immédiatement avant leur assemblage, est exposé au rayonnement.

6. Procédé selon l'une quelconque des revendications précédentes,
**caractérisé en ce que**
la distance entre la source de rayonnement et la couche d'adhésif ou l'agrégat d'adhésif est modifiée pour régler la puissance de rayonnement.

7. Procédé selon l'une quelconque des revendications précédentes,
**caractérisé en ce que**
l'adhésif est irradié avec une puissance volumique appartenant à la plage des 50 à 500 kW/m², en particulier des 100 à 200 kW/m², ou une zone métallique adjacente est irradiée avec une puissance volumique appartenant à la plage des 500 kW/m² à 2 MW/m², en particulier des 750 kW/m² à 1,5 MW/m².

8. Procédé selon l'une quelconque des revendications précédentes,
**caractérisé en ce que**
le rayonnement est focalisé par des réflecteurs courbés.

9. Procédé selon l'une quelconque des revendications précédentes,
**caractérisé en ce que**
la durée de l'irradiation est réglée en fonction des dimensions, en particulier de l'épaisseur, de la couche d'adhésif, selon un temps compris entre 0,5 et 30 s, en particulier entre 2 et 10 s.

10. Procédé selon l'une quelconque des revendications précédentes,
**caractérisé en ce que**
une piste longitudinale d'adhésif est exposée au rayonnement en progression par balayage dans le sens de sa longueur, un dispositif d'irradiation piloté par coordonnées cartésiennes pouvant suivre le trajet de la piste d'adhésif étant utilisé, ou la première et la deuxième pièce sont déplacées le long du dispositif d'irradiation.

11. Procédé selon l'une quelconque des revendications précédentes,
**caractérisé en ce que**
la première et/ou la deuxième pièce sont préchauffées directement avant l'irradiation de l'adhésif.

12. Procédé selon l'une quelconque des revendications précédentes,
**caractérisé en ce que**
des agrégats d'adhésif étroitement localisés sont déposés, en tant que raccordements provisoires, dans des creux adaptés de la première et/ou de la deuxième pièce et sont exposés pour activation à un rayonnement focalisé de façon correspondante.
